# EUROPÄISCHE PATENTSCHRIFT

(11) **EP 0 543 354 B1**
(45) Veröffentlichungstag und Bekanntmachung des Hinweises auf die Patenterteilung: **27.12.1995**
(21) Anmeldenummer: 92119649.9
(22) Anmeldetag: 18.11.1992
(51) Int. Cl.: F16L 59/02

(54) **Isolierteil aus Mineralwolle**
Insulated element made of mineral wool
Elément isolant en laine minérale

(30) Priorität: 21.11.1991 DE 4138211; 14.03.1992 DE 4208246
(43) Veröffentlichungstag der Anmeldung: 26.05.1993
(73) Patentinhaber: Seitz, Wilfried, D-65719 Hofheim (DE)
(72) Erfinder: Seitz, Wilfried, D-65719 Hofheim (DE)
(74) Vertreter: Fuchs Mehler Weiss

(56) Entgegenhaltungen:
- EP-A- 0 001 963
- DE-A- 2 737 495
- DE-A- 3 238 637
- FR-A- 2 508 594
- GB-A- 956 511
- GB-A- 1 194 739

## Beschreibung

Die Erfindung betrifft Isolierteile aus Mineralwolle nach dem Oberbegriff des Patentanspruches 1.

Isolierteile werden dort eingesetzt, wo Wärmeübergänge zur und von der Umgebung vermieden bzw. verzögert werden sollen, wie beispielsweise bei der Isolierung von Kühl-, Gefrier- oder Heizanlagen, Leitungen oder Behältern.

Meist werden diese Isolierteile aus Mineralwolle gefertigt, die durch Zusatz geringer Mengen eines aushärtbaren Bindemittels gestaltstabilisiert werden kann. Der Zusatz von Bindemittel, in der Regel werden Kunstharze eingesetzt, ist nur begrenzt möglich, da die Bindemittel in der Regel entflammbare Substanzen sind, so daß ihre Verwendung im Bereich der Isolierteile der Menge nach begrenzt ist.

Aus der durch Zusatz eines Bindemittels gestaltstabilisierten Mineralwolle können sowohl flächige Matten, beispielsweise für Zuschnitte, als auch Formkörper hergestellt werden. Typische Beispiele für Isolierteile sind Rohrisolierschalen aus Mineralwolle. Sie bestehen üblicherweise aus vorgeformten Abschnitten einer gestaltstabilisierten Mineralwolle. Sie weisen eine Innenfläche auf, die dem zu isolierenden Bauteil zugewandt ist. Die Außenfläche des Formteils ist dem zu isolierenden Bauteil abgekehrt und ist ebenso wie die Stirnfläche an den Enden des Formteils erhöhter mechanischer Belastung beim An- und Abbauen des Formteils ausgesetzt. Darüber hinaus weist das Formteil Trennflächen auf. Dabei handelt es sich um Flächen, wo das Isoliermaterial aufeinandertrifft. Entweder handelt es sich um mehrteilige Formkörper, deren Trennflächen einander benachbart gegenüberliegen, so daß das zu isolierende Bauteil vollständig umhüllt wird, es kann sich aber auch um die gegenüberliegenden Begrenzungsflächen eines einstückigen Formteils handeln, beispielsweise um ein vorgeformtes Rohr aus Mineralwolle, das an einer Stelle durchgehend geschlitzt ist, und das zum Umhüllen eines Rohres aufgebogen und um dieses herumgelegt wird. Nach dem Umhüllen des Rohres liegen dann die beiden Trennflächen, die durch den schlitzartigen Einschnitt gebildet werden, einander gegenüber.

Mineralwolle erweist sich aufgrund der guten Wärmedämmung und der leichten Handhabbarkeit als ausgezeichneter Werkstoff zur Herstellung von Isolierteilen. Aufgrund des - trotz Bindemittelzusatzes - lockeren Faserverbunds bieten jedoch sowohl Mineralwollmatten als auch Formkörper aus Mineralwolle Oberflächen, die mechanischer Beanspruchung (Einbauen, Ausbauen, Zuschneiden) nur in geringem Ausmaß standhalten. So kommt es, beispielsweise beim An- und Abbauen, häufig zum Zerfasern der Oberflächen von Isolierteilen. Dabei werden Fasern und Faserbruchstücke in die Umgebungsluft abgegeben, ein Vorgang, der selbst bei nicht lungengängigen Partikeln eine unerwünschte Belästigung darstellt.

Selbst solche Isolierteile, deren Außenfläche mit einer Folie, üblicherweise einer verstärkten Aluminiumfolie, kaschiert ist, geben bei der Verarbeitung an ihren nicht mit der Kaschierung versehenen Oberflächen noch Fasern und Faserbruchstücke an die Umgebungsluft ab.

Die DE-A-27 37 495 offenbart ein Isolierteil aus geschäumten Asbest, weiches Korrosionsinhibitorgemisch enthält. Die Oberfläche dieses Isolierteils ist mit einer Kaschierung versehen, um in montiertem Zustand eine versiegelte Oberfläche zur Bildung eines feuchtigkeitsundurchlässigen Außenmantels zur Verfügung zu stellen. Die Kaschierung kann dabei aus Metallfolie oder Blech bestehen.

Aus der DE-A-32 38 637 ist eine längsgeschlitzte Rohrisolierschale aus Mineralwolle bekannt, die mit einer Kaschierung aus Metallfolie versehen ist, wobei die Metallfolie einseitig bündig mit der Schlitzkante abschließt.

Es ist daher Aufgabe der vorliegenden Erfindung, Isolierteile derart auszustatten, daß eine Absonderung von Fasern von den Oberflächen der Isolierteile zumindest erschwert wird.

Diese Aufgabe wird gelöst, indem die Oberflächen der Isolierteile zumindest teilweise auf den nicht mit einer Folie kaschierten Flächen, die erhöhten mechanischen Beanspruchungen ausgesetzt sind, mit einer Versiegelung versehen werden, so daß das Absondern von Fasern gerade dort verringert wird, wo durch An- und Abbauen oder sonstige Bearbeitungsmaßnahmen, wie beispielsweise Anschließen des Formteils an das folgende Formteil, eine erhöhte Faserabsonderung zu erwarten ist.

Die Versiegelung wird aufgebracht, indem durch Gießen, Sprühen oder ggf. auch durch Tauchen oder einen ähnlichen Bearbeitungsvorgang auf die Oberfläche des Isolierteils eine Substanz aufgebracht wird, die ein Verkleben, Verkleistern, Einbetten und verstärktes Anhaften der Fasern untereinander bewirkt.

Die aufzutragende Substanz muß jedoch verschiedenen Anforderungen genügen: sie muß verbindend wirken, darf aber nicht brennbar sein, sie muß entsprechend den Anwendungsbereichen temperaturstabil sein, und sie sollte möglichst preiswert sein.

Vorzugsweise wird zur Versiegelung der Oberfläche Wasserglas (Natriumsilikat) aufgetragen. Wasserglas ist nicht brennbar und bewirkt ein verstärktes Anhaften der Fasern untereinander, insbesondere an den Schnittflächen der Isolierteile. Wasserglas erfüllt somit in geeigneter Weise die Voraussetzungen für eine Versiegelung der Isolierteil-Oberflächen; aufgrund seiner anorganischen Struktur ist es nicht brennbar und es wirkt verklebend auf die Mineralwollfasern; zudem ist es preiswert und auch in Ergänzung zur Kaschierung und Beschichtung einsetzbar.

Als weitere Versiegelungsmittel kommen beispielsweise auch eine Gipsaufschlämmung, z.B. Schlämmkreide oder eine herkömmliche Binderfarbe in Frage.

Im folgenden ist die Erfindung am Beispiel einer Rohrisolierschale erläutert. Es zeigt:

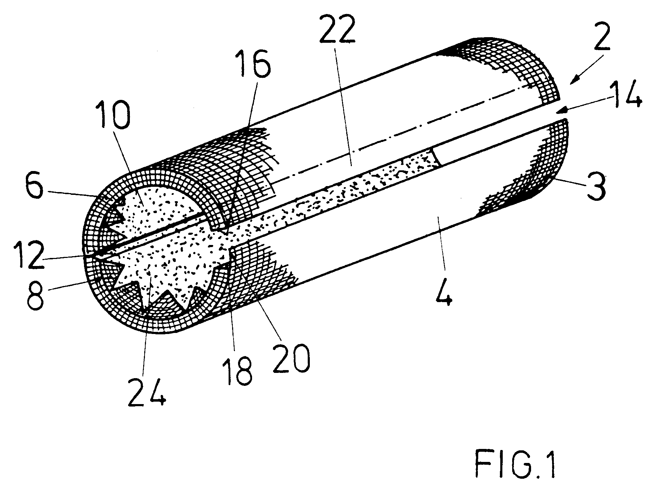

Fig. 1 eine Ansicht einer einteiligen, teilkaschierten und teilversiegelten Rohrisolierschale.

Fig. 1 zeigt die Ansicht einer einteiligen, teilkaschierten und teilversiegelten Rohrisolierschale 2, die eine kaschierte Außenfläche 4 und kaschierte Stirnflächen 6 aufweist, wobei Teile der Kaschierung 8 auf die Innenfläche 10 umgelegt sind. Weiterhin weist die Rohrisolierschale 2 eine versiegelte Innenfläche 10 auf, die, parallel zur Längsachse der Rohrisolierschale 2, eine Trennfuge 12 und, gegenüber der Trennfuge 12 einen ebenfalls parallel zur Längsachse der Rohrisolierschale 2 verlaufenden, durchgehenden Schlitz 14 aufweist, der durch Trennflächen 16 und 18 begrenzt wird. Dort, wo die Außenfläche 4 durch die Trennfläche 18 begrenzt wird, steht über die Außenfläche 4 ein Abschnitt 20 aus Kaschierungsmaterial vor, der an seiner der Rohrisolierschale zugewandten Seite mit einem hier nicht dargestellten Klebestreifen versehen ist. An dem Ende der Außenfläche 4, die durch die Trennfläche 16 begrenzt wird, erstreckt sich parallel zur Trennfuge 12 ein Abschnitt 22, dessen Breite der Breite des Abschnitts 20 aus Kaschierungsmaterial gleich ist, und der als Gegenfläche zur Befestigung des Klebestreifens vorgesehen ist.

Die Herstellung und Verwendung der in Fig. 1 und 2 dargestellten Rohrisolierschale 2 wird nachstehend beschrieben. Ein rohrförmiges Formteil mit geschlossenem Umfang aus gestaltstabilisierter Mineralwolle wird mit einem durchgehenden Schlitz 14, der parallel zur Längsachse des Formteils verläuft, versehen. Bei Durchtrennung der Wand des Formteils zur Erzeugung des Schlitzes 14 entstehen die Trennflächen 16 und 18 als Begrenzung des Schlitzes 14.

Gegenüber dem Schlitz 14 wird die Trennfuge 12 in die Wand des Formteils eingearbeitet, die Tiefe der Trennfuge betragt dabei nur einen Bruchteil der Wandstärke des Formteils.

Auf die Trennflächen 16 und 18 sowie auf die Innenflächen 10 der Rohrisolierschale 2 wird jetzt durch Sprühen oder Gießen oder einen vergleichbaren Bearbeitungsvorgang die Versiegelung aufgebracht. Bei der in Fig. 1 gezeigten Rohrisolierschale wird anschließend, beispielsweise durch Schmelzkleben, auf der Außenfläche 4 und den Stirnflächen 6 die Kaschierung 3, beispielsweise verstärkte Aluminiumfolie, aufgetragen. Die Kaschierung 3 der Außenfläche 4 ist dabei so bemessen, daß sie länger ist als der Umfang der Rohrisolierschale 2. Auf der der Rohrisolierschale 2 zugewandten Seite des überlappenden Streifens 20 wird ein Klebestreifen angebracht.

Der nicht auf der Stirnfläche 6 der Rohrisolierschale 2 aufliegende Teil der Kaschierung 3 wird mit Einschnitten versehen, so daß einzelne Kaschierungsabschnitte 8 entstehen, die in das Innere der Rohrisolierschale 2 gefaltet werden und auf der Innenwandfläche 10 aufliegen.

Beim Einbau der in Fig. 1 dargestellten Rohrisolierschale 2 greift der Monteur in den Schlitz 14 ein, spreizt die Rohrisolierschale 2 auseinander, wobei die Trennfuge 12 wie ein Scharnier wirkt, legt die Rohrisolierschale 2 um das Rohr herum, und isoliert das Rohr vollständig, indem er durch Aneinanderpressen der Trennflächen 16 und 18 und Verkleben der Kaschierung im Bereich der überlappenden Flächen 20 und 22 die Rohrisolierschale 2 vollständig um das zu isolierende Rohr schließt.

Aus dem vorstehenden Abschnitt geht hervor, daß beim Einbau, und dementsprechend auch beim Aus- und Umbau von Rohrisolierschalen, genau die Flächen 10, 16 und 18 mechanisch beansprucht werden, die bei der in Fig. 1 dargestellten Ausführungsform nicht durch eine Kaschierung 3 geschützt sind. Hier erschwert eine Versiegelung der Oberfläche das Absondern von Fasern und Faserbruchstücken.

### Bezugszeichenliste

- 2: Rohrisolierschale
- 3: Kaschierung
- 4: Außenwandfläche
- 6: Stirnwandfläche
- 8: auf die Innenwandfläche umgelegte Kaschierung
- 10: versiegelte Innenwandfläche
- 12: Trennfuge
- 14: Spalt
- 16: versiegelte Trennwandfläche
- 18: versiegelte Trennwandfläche
- 20: Kaschierung mit Klebestreifen
- 22: Klebefläche
- 24: Versiegelung

## Patentansprüche

1. Isolierteil aus Mineralwolle in Gestalt einer Rohrisolierschale, deren Außenmantelfläche mit einer Folienkaschierung, insbesondere einer Aluminiumfolie versehen ist, dadurch gekennzeichnet, daß zumindest Teile der nicht mit einer Folie (3) kaschierten Flächen (10, 16,18) mit einer faserbindenden Versiegelung aus einem zumindest schwer entflammbaren bzw. schwer brennbaren Material versehen sind.

2. Isolierteil nach Anspruch 1, dadurch gekennzeichnet, daß die Kaschierung sich auch über die Stirnseiten (6) der Schale (2) erstreckt.

## Claims

1. Insulating element made of mineral wool and having the shape of a pipe insulating casing, the periphery thereof being provided with a foil lamination, in particular with an aluminium foil, characterized in that at least parts of those areas, (10,16,18) that are not laminated with the foil (3) are provided with a fiber bounding seal made of at least hardly inflammable or, resepectiveley, hardly combustible material.

2. Insulating element according to claim 1, characterised in that the lamination also extends over the front sides (6) of the casing (2).

## Revendications

1. Elément isolant en laine minérale sous la forme d'un enveloppe isolant pour tuyaux dont la périphérie porte un pelliplacage, en particulier une feuille d'aluminium, characterisé en ce qu'au moins des parties (10, 16, 18) non-laminées d'une feuille (3) portent un scellement liant des fibres en matiére au moins peu inflammable, ou, respectivement, peu combustible.

2. Elément isolant d'après la révendication 1, characterisé en ce que la lamination s'étend sur les côtés frontaux (6) de l'enveloppe (2).
